# EUROPÄISCHE PATENTSCHRIFT

(11) **EP 0 658 412 B1**
(45) Veröffentlichungstag und Bekanntmachung des Hinweises auf die Patenterteilung: **04.03.1998**
(21) Anmeldenummer: 94118626.4
(22) Anmeldetag: 26.11.1994
(51) Int. Cl.: B29C 45/56, B29C 45/00

(54) **Verfahren zur Verarbeitung von thermoplastisch Verarbeitbaren Polymeren mittels Spritzgiesstechnik**
Method for processing thermoplastic polymers by injection moulding
Procédé pour le traitement de polymères thermoplastiques par moulage par injection

(30) Priorität: 17.12.1993 CH 3778/93
(43) Veröffentlichungstag der Anmeldung: 21.06.1995
(73) Patentinhaber: HUBER & SUHNER AG, CH-9100 Herisau (CH)
(72) Erfinder: Aeppli, Etienne, CH-9037 Speicherschwendi (CH)
(74) Vertreter: White, William

(56) Entgegenhaltungen:
- EP-A- 0 188 120
- DE-B- 1 113 559
- US-A- 3 263 274
- KUNSTSTOFFE, Bd.79, Nr.11, November 1989, MUNCHEN DE Seiten 1108 - 1112 GUTJAHR 'Herstellen technischer Formteile mit dem Gegentakt-Spritzgiessverfahren'
- PATENT ABSTRACTS OF JAPAN vol. 12, no. 400 (M-756) (3247) 24. Oktober 1988 & JP-A-63 145 007 (MATSUSHITA ELECTRIC IND CO LTD)
- PATENT ABSTRACTS OF JAPAN vol. 16, no. 173 (M-1240) 24. April 1992 & JP-A-04 016 320 (OSAMU HAMADA)

## Beschreibung

Die vorliegende Erfindung betrifft ein Verfahren zur Verarbeitung von thermoplastisch verarbeitbaren Polymeren, wie flüssigkristalline Polymere, faser- oder mineralgefüllte Thermoplaste mittels Spritzgiesstechnik, zur Vermeidung oder zumindest zur Verminderung einer Fliessnaht bei der Herstellung von hohlzylindrischen Werkstücken.

Flüssigkristalline Polymere, abgekürzt LCP genannt, sowie faser- oder mineralgefüllte Thermoplaste haben als charakteristisches Merkmal eine stark orientierte morphologische Struktur.

Nachfolgend wird zur Vereinfachung der Beschreibung für die Eingangs genannten Thermoplaste der Fall der LCP stellvertretend für alle übrigen Thermoplaste, wie faser- oder mineralgefüllte Thermoplaste beschrieben.

LCP bestehen aus starren, stabförmigen Makromolekülen, die sich in der Schmelze parallelisieren und flüssigkristalline Strukturen erzeugen. Wird eine flüssigkristalline Polymerschmelze einer Scher- oder Dehnströmung ausgesetzt, wie dies mit Extruderschnecken der Fall ist, dann ordnen sich die Makromoleküle zu Fasern und Fibrillen und ergeben die spezifische Morphologie im Festzustand.

Die Eigenschaften, die durch die hohe Orientierung in der Polymerschmelze beeinflusst werden, zeigen eine ausgeprägte Anisotropie. In Orientierungsrichtung sind Festigkeit und Steifheit wesentlich höher als quer dazu und der Wärmeausdehnungskoeffizient ist senkrecht zur Orientierung wesentlich höher als parallel dazu.

Nachteilig sind die sogenannten Binde- bzw. Fliessnähte bei jedem Werkstück aus solchen verstärkten Kunststoffen, da sie eine Schwachstelle in den Werkstücken darstellen. Bei flüssigkristallinen Polymeren sind einerseits die starren Molekülketten und anderseits möglicherweise vorhandene faserförmige Verstärkungsstoffe weitgehend parallel zur Fliessnaht ausgerichtet, wodurch die richtungsabhängigen physikalischen Eigenschaften im Bereich der Binde- oder Fliessnaht fehlt oder stark reduziert sind. Dies heisst, dass den Binde- oder Fliessnähten besondere Aufmerksamkeit geschenkt werden muss.

Man unterscheidet zwei Arten von Fliessnähten, nämlich sogenannte stumpfe Fliessnähte, die sich ergeben, wenn zwei Schmelzeströme gegeneinander fliessen wobei die Schmelzefronten senkrecht zur Fliessrichtung aufeinanderstossen. Die Moleküle sind parallel zur Schmelzefront orientiert und können sich daher nicht vereinen. Fliessnähte, die nach Umströmen eines Hindernisses entstehen, werden gebildet durch die zwei durch das Hindernis getrennte Teilströme, die sich in Fliessrichtung hinter dem Hindernis wieder vereinen.

Entsprechend diesen Erkenntnissen, strebt man allgemein an, Werkstücke zu erzeugen, die keine Fliessnaht erzeugen. Von Herstellern der Ausgangsstoffe wird daher geraten, unvermeidbare Fliessnähte in Gebiete geringerer Beanspruchungen zu legen. Dies ist jedoch bei hohlzylindrischen Werkstücken praktisch kaum möglich und die so gebildeten Hülsen haben diametral viel geringere physikalische Eigenschaften als axial.

Die DE-A-1113559 zeigt ein Verfahren auf, das zur Herstellung becherförmiger Gegenstände mittels Thermoplastspritzgusstechnik dient. Das Anspritzen erfolgt zentral in Richtung der Rotationsachse. Der Kern wird rotiert, zwecks Erzeugung von Wärme mittels Scherenergie, infolge der axialen Einspritzung bewirkt die Rotation beim Eintritt des Materials keine bis nur eine geringe scherenergie. Der Materialfluss der in axialer Zichtung des Körpers fliesst, lässt keine Fliessnaht entstehen.

Eine Scherkraft wird gemäss EP-A-0 188 120 durch eine Differenzialzyklus-Spritzgussmethode erzeugt. Es ist nicht vorgesehen einen Kern zwecks Bildung eines Hohlkörpers zu umfliessen.

Dementsprechend ist es eine Aufgabe der Erfindung eine Möglichkeit zu schaffen, um zu verhindern, dass Fliessnähte überhaupt entstehen können.

Erfindungsgemäss wird dies durch die Merkmale im kennzeichnenden Teil des unabhängigen Patentanspruchs erreicht, indem das verflüssigte Material vom Eintritt in die Spritzgiessform an über wenigstens einen Teil der Lange des Werkstückes einer Scherenergie ausgesetzt wird.

Nachfolgend werden Anwendungsbeispiele für die Erfindung erläutert. An Hand einer Zeichnung wird auch eine Anwendung des erfinderischen Verfahrens näher erläutert. In der Zeichnung zeigen:
- Fig. 1: eine Schnittansicht einer Spritzgussform zur Herstellung eines zylindrischen Hohlkörpers, und
- Fig.2: eine Schnittansicht der Spritzgussform gemäss der Schnittlinie A in Fig.1.

Es wird vermutet, dass die Bildung von Fliess- oder Bindenähten durch von der Wand der zu füllenden Form erzeugten Scher- und Dehnungskräften erzeugt wird, weil die Wand gekühlt ist und daher eine Schichtung von den Aussenschichten gegen das Wandinnere erhalten wird. Mit einem einzigen Anguss ergeben sich somit bei hohlkörperförmigen Werkstücken, wie sie beispielsweise in der Lichtwellenleitertechnik verwendet werden unweigerlich zwei umlaufende Schmelzeströme und damit eine den Körper schwächende Bindenaht die durch die unvermeidliche Schichtung an den Aussenwandteilen noch verstärkt wird.

Eine Verhinderung dieser unerwünschten Effekte würde also das Problem der Binde- und Fliessnähte beseitigen. Es wurde festgestellt, dass durch zusätzliche Scherenergie, wie sie beispielsweise im Druckerzeuger durch die rotierende Schnecke entsteht, eine Verminderung der Ausrichtung der Moleküle bewirkt wird.

Diese Erkenntnis wird nun gemäss der Erfindung auf die Seite der Form übertragen und dort eine rotierende Stelle geschaffen, die die zusätzliche Scherenergie ergibt.

Bei einem Werkstück das mit einem Hindernis versehen ist, hinter dem sich eine Fliessnaht bildet, lässt sich nach dieser Erkenntnis die Fliessnaht wenigstens an der schwächsten Stelle, gerade hinter dem Hindernis, verhindern, wenn das Hindernis rotiert wird. Da anfänglich keine Bindenaht entsteht. wird sie sich auch im Nachhinein wenigstens nicht so ausgeprägt ergeben, wie die bei feststehendem Hindernis der Fall ist.

Bei hohlzylindrischen Werstücken muss wenigstens das innere Formteil rotiert werden. Dadurch wird einerseits der Fluss des Schmelzeteilstromes in Richtung der Rotation verstärkt und in der Gegenrichtung geschwächt. Damit werden die Moleküle desorientiert und ergeben keine starre Ausrichtung mehr, wodurch die Bindenaht von Natur aus zumindest geschwächt wird, wenn sie nicht vollständig verschwindet.

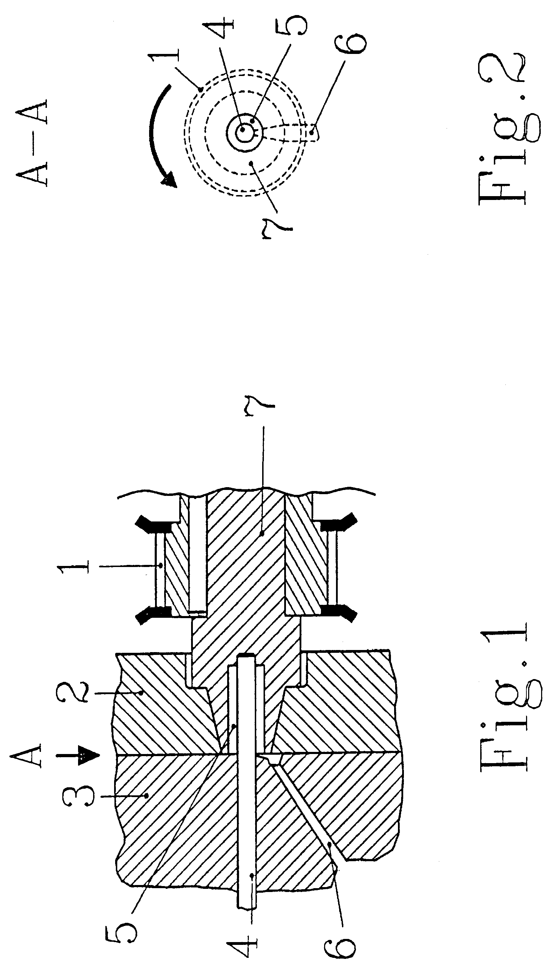

In der Zeichnung zeigen Fig. 1 und Fig.2 eine Spritzgiessanlage in stark vereinfachter Form. Die Spritzgiessform besteht aus einer feststehenden Werkzeugplatte 3 mit dem Angusskanal 6 und einer axialbeweglichen Werkzeugplatte 2. Ein in der feststehenden Werkzeugplatte befindlicher Stift 4 bildet den rotierenden Kern in einer durch einen Formteil 7 der beweglichen Werkzeugplatte 2 gebildeten Kavität 5. Das Formteil 7 kann mit einer Antriebswelle 1 verbunden sein wodurch eine Rotation dieses Formteils 7 ermöglicht wird.

Selbstverständlich sind die beiden Werzeugplatten 2,3 gekühlt, damit das durch Wärme plastifizierte Spritzmaterial wieder erstarrt. Mit der Antriebswelle 1 kann somit das Formteil 7 rotiert werden und dadurch wird Scherenergie auf das in die Kavität eingespritze Material gebracht, so dass sich keine Bindenaht mehr bilden kann.

## Patentansprüche

1. Verfahren zur Verarbeitung von thermoplastisch verarbeitbaren Polymeren mittels Spritzgießtechnik zur Vermeidung oder zumindest zur Verminderung einer Fliessnaht bei der Herstellung von hohlzylindrischen Werkstücken mit einem die Kavität erzeugenden von dem Polymer zu umfliessenden Hindernis, wobei das verflüssigte Material vom Eintritt in die Kavität an durch Rotieren des Hindernisses im Anströmungsgebiet einer Scherenergie ausgesetzt wird.

## Claims

1. Process for the processing of thermoplastic polymers by means of the injection-moulding technique to avoid or at least reduce a flow line in the production of hollow-cylindrical workpieces having an obstacle which generates the cavity and is to be surrounded by the polymer, the liquefied material being subjected to a shearing energy from entry into the cavity by rotating the obstacle in the region of oncoming flow.

## Revendications

1. Procédé de transformation de polymères transformables thermoplastiquement par technique de moulage par injection pour éviter ou au moins diminuer une ride lors de la fabrication de pièces cylindriques creuses avec un obstacle à contourner par le polymère qui forme la cavité, où le matériau liquéfié dès le début de l'entrée dans la cavité est exposé à une énergie de cisaillement dans le domaine d'injection par rotation de l'obstacle.
